# EUROPEAN PATENT SPECIFICATION

(11) **EP 2 678 587 B1**
(45) Date of publication and mention of the grant of the patent: **20.05.2015**
(21) Application number: 11708401.2
(22) Date of filing: 25.02.2011
(51) Int. Cl.: F16J 9/20

(54) **PISTON-PISTON RING SYSTEM FOR A COMBUSTION ENGINE**
KOLBEN-KOLBENRINGSYSTEM FÜR BRENNKRAFTMASCHINE
SYSTÈME DE PISTON-SEGMENT DE PISTON POUR MOTEUR À COMBUSTION

(43) Date of publication of application: 01.01.2014
(73) Proprietor: Mahle International GmbH, 70376 Stuttgart (DE)
(72) Inventor: RABUTÉ, Rémi Daniel, F-95600 Eaubonne (FR); TOMANIK, Eduardo, 04610-002 Sao Paulo SP (BR)
(74) Representative: Pohle, Reinhard
(86) International application number: PCT/EP2011/000917
(87) International publication number: WO 2012/113417

(56) References cited:
- DE-A1- 3 815 803
- US-A- 2 186 020
- US-B1- 7 429 048

## Description

The present invention relates to a piston-piston ring system for a combustion engine with a piston received in a cylinder, said piston comprising a piston base and a piston skirt and having at least one peripheral annular groove. This in turn has an upper groove flank directed towards the piston base and a lower groove flank directed towards the piston skirt, whereby a piston ring is included in the annular groove. This has a ring back, an outer surface, an upper ring flank and a lower ring flank, which merges into an oil scraping edge, which is in constant contact with a working surface of the cylinder. This invention also concerns, in particular, a piston ring for such a system.

Such piston-piston ring systems are known in a variety of forms. The US Patent 2,186,020 discloses a piston-piston ring system, wherein the first piston ring, arranged directly under the top land, has radial fluid passages along its upper ring flank. Also the piston ring has a lower ring flank running obliquely, which corresponds to an obliquely running lower groove flank of the annular groove receiving the piston ring.

It is desired that as little lubricating oil as possible accumulates between the piston rings, in particular between the first and second piston rings. Thus the oil consumption remains controllable, and the build-up of oil carbon in the region of the piston rings and the annular grooves can be avoided. If the piston ring lies against the upper groove flank as a result of the prevailing frictional forces and due to its inertia during the down stroke of the piston, the accumulated oil can penetrate from beneath into the annular groove and accumulate there. During the following upstroke of the piston, the piston ring itself moves downwards and lies against the lower groove flank, and the accumulated oil within the annular groove can flow upwards, that is, in the direction of the piston base and the combustion chamber, respectively. Due to the increasing temperature in the direction of the piston head, the oil can carbonize and block the piston ring in the form of oil carbon.

In the present state of the art, either so-called taper-face rings or rectangular rings are used, which have a negative twist due to due to a cross-sectional interruption (a chamfer, a recess etc.) in the lower inner edge, i.e. during the piston movement these rings lie against the inner area of the upper groove flank and against the outer area of the lower groove flank and thus bar the way of the oil through the annular groove (cf. DE 38 15 803 A1).

In modern petrol and diesel engines, the build height, and thus the compression height of the piston, is reduced in order to save weight. The radial contact pressure of the piston rings is also reduced, in order to minimize friction losses. The ignition pressures and temperatures in the region of the piston head as well as the motor speed, and thus the number of the stroke movements per minute of the piston, are on the other hand increased. This results in not being able to reliably avoid the loss of oil and development of oil carbon with conventional piston rings. In extreme cases, the piston ring can collapse radially, i.e. that it is pressed into the annular groove by the prevailing gas pressure in the cylinder against its radial contact pressure. The negative twist can be strengthened, but there is also the increased risk that the piston ring will twist too much in the annular groove and will jam.

The object of the present invention is to provide a piston-piston ring system as well as a piston ring, which allow a reliable control of oil consumption in modern petrol and diesel engines, and which reliably prohibit the build-up of oil carbon.

The solution is given by the following features: The groove flanks of the annular groove and the upper ring flank of the piston ring extend radially outward at right angles to the central axis of the piston; the lower ring flank of the piston ring and the central axis of the piston form an angle with an angular degree of β < 90°; the upper ring flank of the piston ring has annular fluid passages. The subject matter of the present invention includes also a piston ring, in particular for use with said type of piston-piston ring system, which has a ring back, an upper ring flank, a lower ring flank, an outer surface and an oil scraping edge, wherein the upper ring flank runs horizontally, wherein the lower ring flank of the piston ring runs obliquely in the direction of the upper ring flank, in such a manner that the axial ring height h of the piston ring in the area of the ring back is smaller than the axial ring height H in the area of the outer surface, and wherein the upper ring flank of the piston ring has radial fluid passages, and that the upper ring flank and the lower ring flank form an angle α of 30 to 80 minutes.

As the lower ring flank of the piston ring is bevelled in design and forms an acute angle with the central axis of the piston, the lower ring flank also forms an acute angle with the horizontally running lower groove flank of the annular groove. The lower ring flank and the lower groove flank form a reliably tight fitting, linear, circumferential sealing. This ensures a reliable seal against the oil return flow in the direction of the piston base. At the same time, the flow of fluids (oil and combustion gases) in the direction of the piston skirt is secured due to the inertial motion of the piston ring during the piston stroke and due to the fluid passages in the upper ring flank, so that the annular groove as well as the piston ring are reliably kept free of oil carbon. The fluid passages further avoid the risk of a radial collapse of the piston ring, as the combustion gases are transported through the fluid passages into the annular groove and from there in the direction of the piston skirt, so that no gas pressure can be built up, which could otherwise overcome the radial contact pressure of the piston ring.

The present invention is applicable to all piston types and piston materials (e.g. light metal pistons, steel pistons, single or multi-part pistons, cast pistons, forged pistons etc.), as well as for all forms of pistons rings and piston ring materials. The invention is appropriate for use in petrol engines of all types.

Preferred embodiments of the present invention are indicated by the dependent claims.

On the basis of corresponding observations, the fluid passages can also be differently dimensioned. A typical operative value for the depth d of the fluid passage is between 0.02 and 0.1 mm.

The size and design of the fluid passages can also be adapted to the engine construction and engine size. The fluid passages can expediently be uniformly distributed around the circumference of the upper ring flank. Each fluid passage can extend, for example, across a circular arc section with an angular degree of 30° to 40°. The cross-sections of the fluid passages can, for example, be designed as rectangular, trapezoidal, arc-shaped or wave-shaped. The fluid passages can be casted into the piston rings or subsequently introduced by cutting machining, such as milling, grinding or turning processes.

The outer surface and the working surface of the cylinder expediently form an angle γ of 30 to 120 minutes (so-called taper-face ring).

It is particularly preferable that the piston has three annular grooves, whereby the piston-piston ring system according to the present invention, and the piston ring according to the present invention, respectively, is provided in the second annular groove.

An embodiment of the present invention will be described below together with the attached figures. They show the following in a schematic representation, not true to scale:
- Fig. 1: an embodiment of a piston suitable for a piston-piston ring system according to the present invention, in a sectional view;
- Fig. 2: a first embodiment of a piston ring according to the present invention, in a plan view;
- Fig. 3: the piston ring according to Figure 2 in a sectional view;
- Fig. 4: a detailed view of the piston ring according to Figures 2 and 3;
- Fig. 5: a detailed view of a further embodiment of a piston ring according to the invention;
- Fig. 6: an enlarged detailed view of the piston-piston ping system according to Figure 1 in a sectional view.

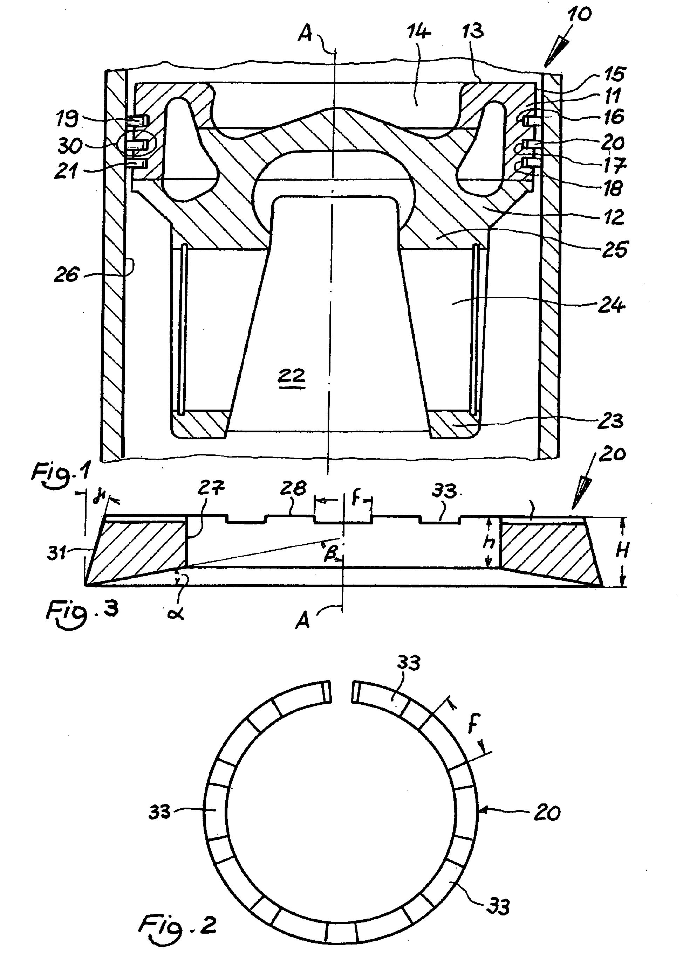

Figure 1 shows an embodiment of a piston 10 suitable for a piston-piston ring system 30, according to the present invention. The piston 10, according to the present embodiment, is a two-part box-shaped piston with a piston upper part 11 and a piston lower part 12, which can be manufactured of any metallic material. The piston upper part 11 can, for example, be made of a steel material and the piston lower part 12 can be made of a light metal material, for example an aluminium alloy. The piston upper part 11 comprises a part of a piston base 13, a part of a combustion bowl 14, as well as a circumferential top land 15, and three annular grooves 16, 17, 18 wherein the three piston rings 19, 20, 21, namely a compression ring 19, a scraper ring 20 and an oil control ring 21 are inserted. The piston lower part 12 comprises a piston skirt 22, piston hubs 23, arranged set back from the top land 15 and provided with boss bores 24 for receiving a piston pin (not shown), and hub supports 25. The piston 10, when mounted, is housed in a cylinder in a manner known per se, the working surface 26 of said cylinder being indicated in Figure 1. The working surface 26 can either be formed in the cylinder bore or by a cylinder liner.

In this embodiment, the piston ring 20 and the associated piston-piston ring system 30 are designed according to the present invention, respectively. Of course, the piston can include more than one piston ring, or more than one piston-piston ring system designed according to the present invention.

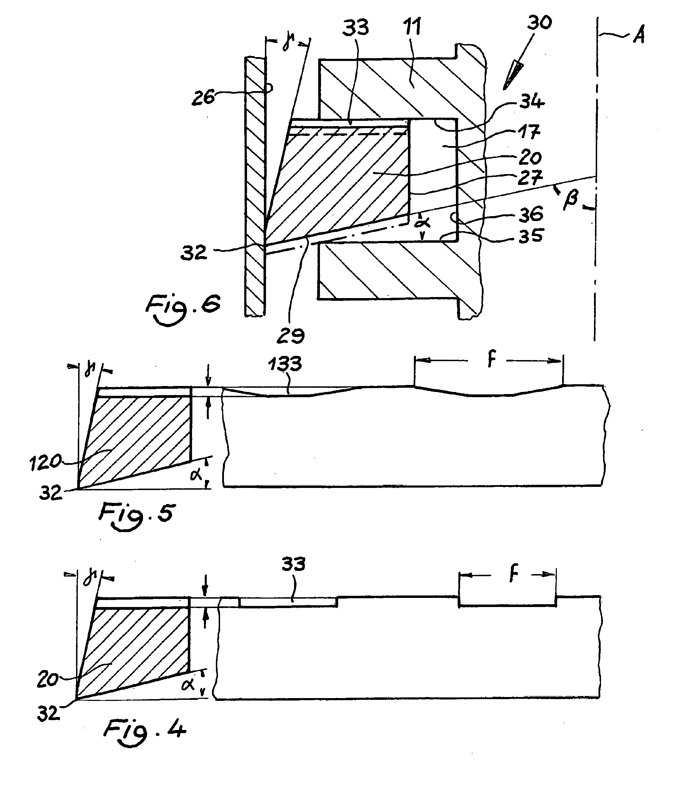

Figures 2 to 4 show a first embodiment of a piston ring 2, according to the present invention. In this embodiment, the piston ring 20 is a taper-face ring and includes a ring back 27, an upper ring flank 28, a lower ring flank 29 and an outer surface 31. The outer surface 31 is conically machined, in a manner known per se, resulting in an angle γ of 30 to 120 minutes. The outer surface 31 and the lower ring flank 29 form an oil scraping edge 32. The upper ring flank 28 runs horizontally, which means, in assembled condition of the piston ring 20 according to the invention, perpendicular to the central axis of the piston A (cf. Figure 1). The lower ring flank 29 runs obliquely in the direction of the upper ring flank 28, such that the axial ring height h of the piston ring 20, in the area of ring back 27, is lower than the axial ring height H in the area of the outer surface 31 (cf. Figure 3). In this embodiment, the upper ring flank 28 and the lower ring flank 29 form an angle α 30 to 90 minutes (cf. Figure 4). Accordingly the lower ring flank 29 of the piston ring 20 in assembled condition and central axis A of the piston 10 enclose an acute angle β with an angular degree of less than 90°.

The upper ring flank 28 of the piston ring 20 according to the present invention further has annular fluid passages 33 which are distributed evenly around its circumference. In this embodiment, ten fluid passages are provided, with an arc length f which corresponds substantially with a circular arc section having an angular degree of 30° to 40° (cf. Figure 2). In this embodiment, the fluid passages 33 have a depth d of 0.05mm.

Other configurations are of course possible, e.g. 4 to 16 fluid passages with appropriate dimensions.

The cross-sections of the fluid passages 33 can be chosen arbitrarily. In this embodiment, the fluid passages 33 of the piston ring 20 show a rectangular cross-section. Figure 5 shows a further embodiment of a piston ring 120 according to the invention, its structure corresponding to the structure of the piston ring 20 according to Figures 2 to 4, with the exception that the fluid passages 133 show a trapezoidal cross-section. Of course, other cross-sections can be selected, for example arch-shaped or wave-shaped cross-sections. With regard to the further structure of the piston ring 120, reference is made to the description referring to Figures 2 to 4.

Figure 6 shows the embodiment of a piston-piston ring system 30 according to Figure 1, in an enlarged view. The following description applies to the piston ring 120 according to Figure 5 as well.

The associated annular groove 17 has an upper groove flank 34 and a lower groove flank 35, as well as a groove bottom 36. The two groove flanks 34, 35 run horizontally, i.e. perpendicularly to the central axis A of the piston 10. As the lower ring flank 29 of the piston ring 20 is designed obliquely and forms an acute angle β with the central axis A of the piston 10, the lower ring flank 29 also forms an acute angle α with the horizontally running lower groove flank 35, namely the same angle α of 30 to 90 minutes, which is enclosed by the upper ring flank 28 and the lower ring flank 29 of the piston ring 20. As in this embodiment the outer surface 31 is conically machined as described above, it encloses with the working surface 26 of the cylinder an angle γ of 30 to 120 minutes.

Figure 6 shows the position of the piston ring 20 during a down stroke of the piston 10 in the cylinder. Due to its inertia and the acceleration of the downstroke, the piston ring 20 is pressed against the upper groove flank 34 of the annular groove 17. In this position, the fluid passages 33 cause the combustion gases to flow from the direction of the piston base 13 into the annular groove 17, to flow further between the ring back 27 and the groove bottom 36, and to flow out of the annular groove 17 through the gap created by the lower ring flank 29 and the lower groove flank 35. Thus, oil which is possibly present will be driven out of the annular groove 17 and, together with the oil accumulated at the oil scraping edge 32, transported in the direction of the piston skirt 22. The oil return flow in the direction of the piston base 13, and with it increased oil consumption, is reliably avoided.

During the following upstroke of the piston 10 in the cylinder, the piston ring 20 is pressed against the lower groove flank 35 due to its inertia and the acceleration of the upstroke. This position is indicated by a dashed-and-dotted line in Figure 6. In this position, the obliquely designed lower ring flank 29 of the piston ring 20 is pressed against the outer edge of the lower groove flank 35 of the annular groove 17. Thus, the lower ring flank 29 of the piston ring 20 together with the lower groove flank 35 of the annular groove 17 reliably forms a tightly fitting, linear circumferential sealing. This ensures a reliable sealing against an oil return flow in the direction of the piston base 13 during the upstroke of the piston 10.

Thus an oil return flow in the direction of the piston base 13, and consequently increased oil consumption, is reliably prevented at any time. At the same time, the flow of fluids (oil and combustion gases) in the direction of the piston skirt 22 is ensured, due to the inertial motion of the piston ring 20, 120 during the piston stroke and due to the fluid passages 33, 133 provided in the upper ring flank 28, so that the annular groove 17 and the piston ring 20, 120 can be reliably kept free form oil carbon. The fluid passages 33, 133 further reduce the risk of radial collapse of the piston ring 20, 120, because the combustion gases are transported through the fluid passages 33, 133 into the annular groove 17 and from there in the direction of the piston skirt 22, so that no gas pressure can be built up, which could overcome the radial contact pressure of the piston ring 20, 120.

The piston-piston ring system 30, as well as the piston ring 20 can be manufactured according to the invention by manufacturing processes known per se.

## Claims

1. Piston-piston ring system (30) for a combustion engine with a piston (10) received in a cylinder, said piston (10) comprising a piston base (13) and a piston skirt (22) and having at least one peripheral annular groove (17), which has an upper groove flank (34) directed towards the piston base (13) and a lower groove flank directed towards the piston skirt (22), whereby a piston ring (20,120) is included in the annular groove (17), said piston ring (20, 120) having a ring back (27), an outer surface (31), an upper ring flank (28) and a lower ring flank (29), said lower ring flank (29) merging into an oil scraping edge (32) being in contact with a working surface (26) of the cylinder, **characterised in that** the groove flanks (34, 35) of the annular groove (17) and the upper ring flank (28) of the piston ring (20, 120) extend radially outward at right angles to the central axis (A) of the piston (10), that the lower ring flank (29) of the piston ring (20, 120) and the central axis (A) of the piston (10) form an angle β with an annular degree of less than 90°, and that the upper ring flank (28) of the piston ring (20,120) has radial fluid passages (33, 133).

2. Piston-piston ring system according to claim 1, **characterised in that** the lower ring flank (29) of the piston ring (20, 120) and the lower groove flank (35) of the annular groove (17) form an angle α of 30 to 90 minutes.

3. Piston-piston ring system according to claim 1, **characterised in that** the fluid passages (33, 133) have a depth (d) of 0.02 to 0.1 mm.

4. Piston-piston ring system according to claim 1, **characterised in that** the fluid passages (33, 133) are uniformly distributed around the circumference of the upper ring flank (28) of the piston ring (20, 120).

5. Piston-piston ring system according to claim 1, **characterised in that** each fluid passage (33, 133) extends across a circular arc section with an angular degree of 30° to 40°.

6. Piston-piston ring system according to claim 1, **characterised in that** the cross-section of the fluid passages (33, 133) is designed as rectangular, trapezoidal, arch-shaped or wave-shaped.

7. Piston-piston ring system according to claim 1, **characterised in that** the outer surface (31) of the piston ring (20, 120) and the working surface (26) of the cylinder form an angle γ of 30 to 120 minutes.

8. Piston-piston ring system according to claim 1, **characterised in that** the piston (10) has three annular grooves (16, 17, 18) and the piston ring (20, 120) is provided in the second annular groove (17).

9. Piston ring (20, 120), which has a ring back (27), an upper ring flank (28), a lower ring flank (29), and an outer surface (31) and an oil scraping edge (32), wherein the upper ring flank (28) runs horizontally, that the lower ring flank (29) of the piston ring (20, 120) runs obliquely in the direction of the upper ring flank (28), in such a manner that the axial ring height (h) of the piston ring (20, 120) in the area of the ring back (27) is smaller than the axial ring height (H) in the area of the outer surface (31), and that the upper ring flank (28) of the piston ring (20,120) has radial fluid passages (33, 133), **characterised in that** the upper ring flank (28) and the lower ring flank (29) form an angle α of 30 to 80 minutes.

10. The piston ring according to claim 9, **characterised in that** the fluid passages (33, 133) have a depth (d) of 0.02 to 0.1 mm.

11. The piston ring according to claim 9, **characterised in that** the fluid passages (33, 133) are uniformly distributed around the circumference of the upper ring flank (28).

12. The piston ring according to claim 9, **characterised in that** each fluid passage (33, 133) extends across a circular arc section with an angular degree of 30° to 40°.

13. The piston ring according to claim 9, **characterised in that** the cross-section of the fluid passages (33, 133) is designed as rectangular, trapezoidal, arch-shaped or wave-shaped.

## Patentansprüche

1. Kolben-Kolbenring-System (30) für einen Verbrennungsmotor mit einem Kolben (10), der in einem Zylinder aufgenommen wird, wobei der Kolben (10) eine Kolbenbasis (13) und einen Kolbenmantel (22) umfasst und wenigstens eine umlaufende ringförmige Rille (17) hat, die eine obere Rillenflanke (34), die zu der Kolbenbasis (13) hin gerichtet ist, und eine untere Rillenflanke, die zu dem Kolbenmantel (22) hin gerichtet ist, hat, wobei ein Kolbenring (20, 120) in der ringförmigen Rille (17) eingeschlossen ist, wobei der Kolbenring (20, 120) einen Ringrücken (27), eine Außenfläche (31), eine obere Ringflanke (28) und eine untere Ringflanke (29) hat, wobei die untere Ringflanke (29) in eine Ölabstreifkante (32) übergeht, die in Berührung mit einer Arbeitsfläche (26) des Zylinders steht, **dadurch gekennzeichnet, dass** sich die Rillenflanken (34, 35) der ringförmigen Rille (17) und die obere Ringflanke (28) des Kolbenrings (20, 120) in Radialrichtung nach außen in rechten Winkeln zu der Mittelachse (A) des Kolbens (10) erstrecken, dass die untere Ringflanke (29) des Kolbenrings (20, 120) und die Mittelachse (A) des Kolbens (10) einen Winkel β mit einem Winkelgrad von weniger als 90° bilden und dass die obere Ringflanke (28) des Kolbenrings (20, 120) radiale Fluiddurchgänge (33, 133) hat.

2. Kolben-Kolbenring-System nach Anspruch 1, **dadurch gekennzeichnet, dass** die untere Ringflanke (29) des Kolbenrings (20, 120) und die untere Rillenflanke (35) der ringförmigen Rille (17) einen Winkel α von 30 bis 90 Minuten bilden.

3. Kolben-Kolbenring-System nach Anspruch 1, **dadurch gekennzeichnet, dass** die Fluiddurchgänge (33, 133) eine Tiefe (d) von 0,02 bis 0,1 mm haben.

4. Kolben-Kolbenring-System nach Anspruch 1, **dadurch gekennzeichnet, dass** die Fluiddurchgänge (33, 133) gleichförmig um den Umfang der oberen Ringflanke (28) des Kolbenrings (20, 120) verteilt sind.

5. Kolben-Kolbenring-System nach Anspruch 1, **dadurch gekennzeichnet, dass** sich jeder Fluiddurchgang (33, 133) durch eine Kreisbogensektion mit einem Winkelgrad von 30° bis 40° erstreckt.

6. Kolben-Kolbenring-System nach Anspruch 1, **dadurch gekennzeichnet, dass** der Querschnitt der Fluiddurchgänge (33, 133) als rechteckig, trapezförmig, bogenförmig oder wellenförmig gestaltet ist.

7. Kolben-Kolbenring-System nach Anspruch 1, **dadurch gekennzeichnet, dass** die Außenfläche (31) des Kolbenrings (20, 120) und die Arbeitsfläche (26) des Zylinders einen Winkel γ von 30 bis 120 Minuten bilden.

8. Kolben-Kolbenring-System nach Anspruch 1, **dadurch gekennzeichnet, dass** der Kolben (10) drei ringförmige Rillen (16, 17, 18) hat und der Kolbenring (20, 120) in der zweiten ringförmigen Rille (17) bereitgestellt wird.

9. Kolbenring (20, 120), der einen Ringrücken (27), eine obere Ringflanke (28), eine untere Ringflanke (29) und eine Außenfläche (31) und eine Ölabstreifkante (32) hat, wobei die obere Ringflanke (28) in Horizontalrichtung verläuft, dass die untere Ringflanke (29) des Kolbenrings (20, 120) schräg in der Richtung der oberen Ringflanke (28) verläuft, auf eine solche Weise, dass die axiale Ringhöhe (h) des Kolbenrings (20, 120) im Bereich des Ringrückens (27) kleiner ist als die axiale Ringhöhe (H) im Bereich der Außenfläche (31), und dass die obere Ringflanke (28) des Kolbenrings (20, 120) radiale Fluiddurchgänge (33, 133) hat, **dadurch gekennzeichnet, dass** die obere Ringflanke (28) und die untere Ringflanke (29) einen Winkel α von 30 bis 80 Minuten bilden.

10. Kolbenring nach Anspruch 9, **dadurch gekennzeichnet, dass** die Fluiddurchgänge (33, 133) eine Tiefe (d) von 0,02 bis 0,1 mm haben.

11. Kolbenring nach Anspruch 9, **dadurch gekennzeichnet, dass** die Fluiddurchgänge (33, 133) gleichförmig um den Umfang der oberen Ringflanke (28) verteilt sind.

12. Kolbenring nach Anspruch 9, **dadurch gekennzeichnet, dass** sich jeder Fluiddurchgang (33, 133) durch eine Kreisbogensektion mit einem Winkelgrad von 30° bis 40° erstreckt.

13. Kolbenring nach Anspruch 9, **dadurch gekennzeichnet, dass** der Querschnitt der Fluiddurchgänge (33, 133) als rechteckig, trapezförmig, bogenförmig oder wellenförmig gestaltet ist.

## Revendications

1. Système de piston - segment de piston (30) pour un moteur à combustion interne comportant un piston (10) reçu dans un cylindre, ledit piston (10) comprenant une base de piston (13) et une jupe de piston (22) et ayant au moins une rainure annulaire périphérique (17), qui possède un flanc de rainure supérieur (34) dirigé vers la base de piston (13) et un flanc de rainure inférieur dirigé vers la jupe de piston (22), moyennant quoi un segment de piston (20, 120) est inclus dans la rainure annulaire (17), ledit segment de piston (20, 120) ayant un dos de bague (27), une surface supérieure (31), un flanc de bague supérieur (28) et un flanc de bague inférieur (29), ledit flanc de bague inférieur (29) fusionnant dans un bord de raclage d'huile (32) étant en contact avec une surface de travail (26) du cylindre, **caractérisé en ce que** les flancs de rainure (34, 35) de la rainure annulaire (17) et le flanc de segment supérieur (28) du segment de piston (20, 120) s'étendent radialement vers l'extérieur à des angles droits par rapport à l'axe central (A) du piston (10), **en ce que** le flanc de segment inférieur (29) du segment de piston (20, 120) et l'axe central (A) du piston (10) forment un angle β avec un degré annulaire inférieur à 90° et **en ce que** le flanc de segment supérieur (28) du segment de piston (20, 120) a des passages radiaux de fluide (33, 133).

2. Système de piston - segment de piston selon la revendication 1, **caractérisé en ce que** le flanc de segment inférieur (29) du segment de piston (20, 120) et le flanc de rainure inférieur (35) de la rainure annulaire (17) forment un angle α de 30 à 90 minutes.

3. Système de piston - segment de piston selon la revendication 1, **caractérisé en ce que** les passages de fluide (33, 133) ont une profondeur (d) de 0.02 à 0.1 mm.

4. Système de piston - segment de piston selon la revendication 1, **caractérisé en ce que** les passages de fluide (33, 133) sont répartis uniformément autour de la circonférence du flanc de segment supérieur (28) du segment de piston (20, 120).

5. Système de piston - segment de piston selon la revendication 1, **caractérisé en ce que** chaque passage de fluide (33, 133) s'étend à travers une section d'arc circulaire avec un degré angulaire de 30° à 40°.

6. Système de piston - segment de piston selon la revendication 1, caractérisé e ce que la section transversale des passages de fluide (33, 133) est conçue comme rectangulaire, trapézoïdale, de forme arquée ou ondulée.

7. Système de piston - segment de piston selon la revendication 1, **caractérisé en ce que** la surface extérieure (31) du segment de piston (20, 120) et la surface de travail (26) du cylindre forment un angle γ de 30 à 120 minutes.

8. Système de piston - segment de piston selon la revendication 1, **caractérisé en ce que** le piston (10) a trois rainures annulaires (16, 17, 18)et le segment de piston (20, 120) est prévu dans la seconde rainure annulaire (17).

9. Segment de piston (20, 120) qui possède un dos de segment (27), un flanc de segment supérieur (28), un flanc de segment inférieur (29) et une surface extérieur (31) et un bord de raclage d'huile (32), dans lequel le flanc de segment supérieur (28) s'étend horizontalement, en ce que le flanc de segment inférieur (29) du segment de piston (20, 120) s'étend en oblique dans la direction du flanc de segment supérieur (28), d'une manière telle que la hauteur de segment axial (h) de la bague de piston (20, 120) dans la zone du dos de segment (27) soit plus petite que la hauteur de segment axial (H) dans la zone de la surface extérieure (31), et en ce que le flanc de segment supérieur (28) du segment de piston (20, 120) a des passages radiaux de fluide (33, 133), **caractérisé en ce que** le flanc de segment supérieur (28) et le flanc de segment inférieur (29) forment un angle α de 30 à 80 minutes.

10. Segment de piston selon la revendication 9, **caractérisé en ce que** les passages de fluide (33, 133) ont une profondeur (d) de 0.02 à 0.1 mm.

11. Segment de piston selon la revendication 9, **caractérisé en ce que** les passages de fluide (33, 133) sont répartis uniformément autour de la circonférence du flanc de segment supérieur (28).

12. Segment de piston selon la revendication 9, **caractérisé en ce que** chaque passage de fluide (33, 133) s'étend à travers une section d'arc circulaire avec un degré angulaire de 30° à 40°.

13. Segment de piston selon la revendication 9, **caractérisé en ce que** la section transversale des passages de fluide (33, 133) est conçue comme rectangulaire, trapézoïdale, de forme arquée ou ondulée.
